(19) **Europäisches Patentamt**
**European Patent Office**
**Office européen des brevets**

(11) **EP 4 676 147 A1**

(12) **EUROPEAN PATENT APPLICATION**
published in accordance with Art. 153(4) EPC

(43) Date of publication:
07.01.2026 Bulletin 2026/02

(51) International Patent Classification (IPC):
*H04W 72/1268* *(2023.01)*

(21) Application number: 24769716.2

(52) Cooperative Patent Classification (CPC):
H04W 72/0446; H04W 72/0453; H04W 72/1268

(22) Date of filing: 20.02.2024

(86) International application number:
PCT/CN2024/077734

(87) International publication number:
WO 2024/188021 (19.09.2024 Gazette 2024/38)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(72) Inventors:
• DENG, Bo
  Shenzhen, Guangdong 518055 (CN)
• ZHANG, Bin
  Shenzhen, Guangdong 518055 (CN)
• ZHOU, Linglin
  Shenzhen, Guangdong 518055 (CN)

(30) Priority: 13.03.2023 CN 202310288599

(74) Representative: Canzler & Bergmeier
Patentanwälte
Partnerschaft mbB
Despag-Straße 6
85055 Ingolstadt (DE)

(71) Applicant: Sanechips Technology Co., Ltd.
Shenzhen, Guangdong 518055 (CN)

(54) **DATA PROCESSING METHOD AND DATA PROCESSING APPARATUS**

(57)     Provided in the present disclosure is a data processing method, comprising: determining the type of signal data; and performing online processing on the signal data according to the type of the signal data, so as to map the signal data onto a time-frequency resource to carry out transmission. Further provided in the present disclosure is a data processing apparatus.

FIG. 2

EP 4 676 147 A1

**Description**

CROSS REFERENCE TO RELATED APPLICATIONS

This application claims priority to Chinese Patent Application No. 202310288599.2, filed on March 13, 2023, the contents of which are incorporated herein by reference in its entirety.

TECHNICAL FIELD

The present disclosure relates to the technical field of communications, and in particular, to a data processing method and a data processing apparatus.

BACKGROUND

In a communication system, resource mapping is used to map various processed channel data and corresponding Reference Signal (RS) data to time-frequency resource grids for processing in a subsequent process.
According to the 3rd Generation Partnership Project New Radio (3GPP NR) protocol, the channel data mapped to uplink time-frequency resource grids includes Physical Uplink Shared Channel (PUSCH) data, Physical Uplink Control Channel (PUCCH) data, Physical Random Access Channel (PRACH) data, etc.; and the RS data includes Physical Uplink Shared Channel Demodulation Reference Signal (PUSCH_DMRS) data, Physical Uplink Control Channel Demodulation Reference Signal (PUCCH_DMRS) data, Phase Tracking Reference Signal (PTRS) data, Sounding Reference Signal (SRS) data, etc. The supported uplink transmission schemes include a Discrete Fourier Transform-Spread-Orthogonal Frequency Division Multiplexing (DFT-S-OFDM) transmission scheme (also referred to as a Single Carrier-Frequency Division Multiple Access (SCFDMA) transmission scheme) in addition to a basic Cyclic Prefix-Orthogonal Frequency Division Multiplexing (CP-OFDM) transmission scheme. In the two transmission schemes, implementation processes of the related signals are different; and different RS data and corresponding channel data are also different in distribution in a radio frame structure. For example, the distributions are divided into time division multiplexing and frequency division multiplexing. In addition, two different Resource Block (RB) mapping types, i.e., type 0 and type 1, are defined for an uplink in the field of NR, and different uplink transmission schemes support different RB mapping types; and for different RB mapping types, generation processes of different RS data also vary.
The generation and resource mapping of uplink signals in the NR protocol involve many scenarios, are complex to implement, and are prone to errors.

SUMMARY

The embodiments of the present disclosure provide a data processing method and a data processing apparatus.
In a first aspect, an embodiment of the present disclosure provides a data processing method, including: determining a type of signal data; and performing, based on the type of the signal data, online processing on the signal data to map the signal data to time-frequency resources for transmission.
In a second aspect, an embodiment of the present disclosure provides a data processing apparatus, including: a classification unit configured to determine a type of signal data; and a processing unit configured to perform, based on the type of the signal data, online processing on the signal data to map the signal data to time-frequency resources for transmission.

BRIEF DESCRIPTION OF DRAWINGS

FIG. 1 is a schematic diagram illustrating a scenario of data transmission in an uplink transmission link;
FIG. 2 is a flowchart of a data processing method according to an embodiment of the present disclosure;
FIG. 3 is a schematic diagram of a data processing apparatus according to an embodiment of the present disclosure;
FIG. 4 is a schematic diagram of another data processing apparatus according to an embodiment of the present disclosure;
FIG. 5 is a schematic diagram of yet another data processing apparatus according to an embodiment of the present disclosure;
FIG. 6 is a schematic diagram of a data processing method corresponding to uplink data online mapping according to an embodiment of the present disclosure;
FIG. 7 is a schematic diagram illustrating uplink data online mapping according to an embodiment of the present disclosure;

FIG. 8 is a schematic diagram illustrating frequency domain distributions of PUSCH_DMRSs in different scenarios according to an embodiment of the present disclosure;

FIG. 9 is a schematic diagram illustrating frequency domain distributions of PTRSs in different scenarios according to an embodiment of the present disclosure; and

FIG. 10 is a schematic diagram illustrating a frequency domain distribution of PTRSs according to an embodiment of the present disclosure.

DETAIL DESCRIPTION OF EMBODIMENTS

In order to enable those of ordinary skill in the art to better understand the technical solutions of the present disclosure, a data processing method and a data processing apparatus provided in the present disclosure are described in detail below with reference to the drawings.

Exemplary embodiments will be described more fully below with reference to the drawings, but the exemplary embodiments described herein may be embodied in different forms and should not be interpreted as being limited to the embodiments described herein. Rather, the embodiments are provided to make the present disclosure thorough and complete, and may enable those of ordinary skill in the art to fully understand the scope of the present disclosure.

The embodiments described herein and the features thereof can be combined with one another if no conflict is incurred.

The term "and/or" used herein includes any combination and all combinations of one or more associated listed items.

The terms used herein are merely used to describe specific embodiments, and are not intended to limit the present disclosure. As used herein, "a", "an" and "the" which indicate a singular form are also intended to include a plural form, unless expressly stated in the context. It should be further understood that the term "include" and/or the term "be made of" used herein indicate the presence of the described features, integers, operations, elements and/or components, but do not exclude the presence or addition of one or more other features, integers, operations, elements, components and/or combinations thereof.

Unless otherwise defined, all terms (including technical terms and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

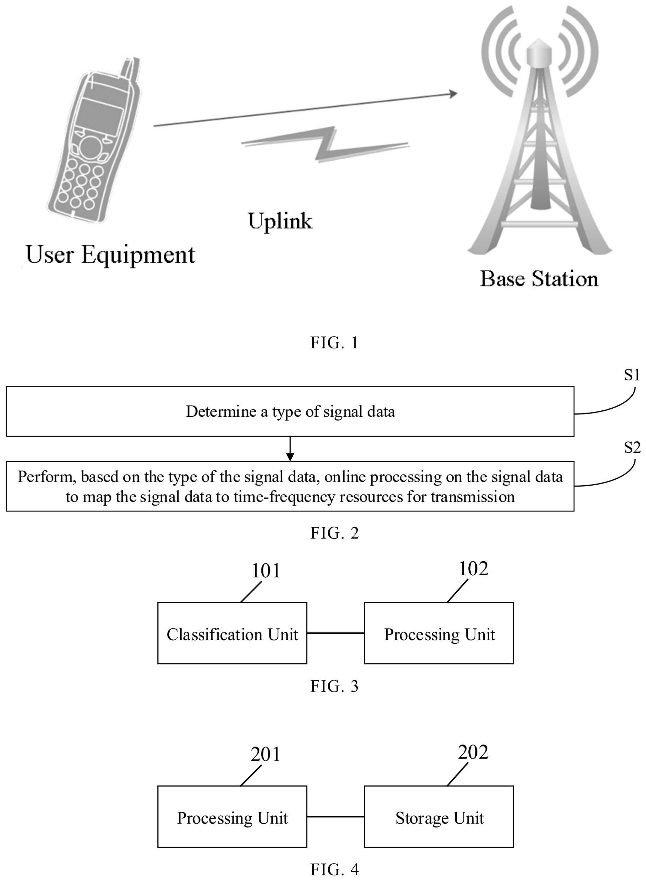

FIG. 1 illustrates a common scenario of data transmission in an uplink transmission link in a wireless communication environment, where the uplink transmission link refers to a link for data transmission from a User Equipment (UE) to a base station. Two different RB mapping schemes, i.e., type 0 and type 1, are defined in the 3GPP NR protocol.

Type 0 refers to a bitmap-based mapping mode which allows a network to schedule frequency domain resources in any way. Each bit in a bitmap generally indicates a Physical Resource Block Group (PRGs) consisting of consecutive RBs. Instead of depending on a bitmap, type 1 describes an allocated RB with a start position and a length. If the DFT-S-OFDM transmission scheme is adopted as the uplink transmission scheme, only type 1 is supported, while both type 0 and type 1 are supported in the CP-OFDM transmission scheme, and both involve mapping of Virtual Resource Blocks (VRBs). The uplink mapping of VRBs to Physical Resource Blocks (PRBs) is non-interleaved mapping.

For the uplink RS PUSCH_DMRS in NR, frequency domain configuration supports configuration type 1 and configuration type 2. In the case of configuration type 1, the RS is mapped every other subcarrier in the frequency domain; and in the case of configuration type 2, each Code Division Multiplexing (CDM) group of the RS occupies two adjacent subcarriers. An orthogonal code of length 2 is used in the CDM group for distinguishing between antenna ports, and at most three CDM groups are supported in each RB. If the DFT-S-OFDM transmission scheme is adopted as the uplink transmission scheme, merely configuration type 1 is supported, while configuration type 1 and configuration type 2 are both supported in the CP-OFDM transmission scheme.

For PUCCH_Format1_DMRS (1 RB), PUCCH_Format3_DMRS (1 RB to 16 RBs), and PUCCH_Format4_DMRS (1 RB), a symbol carrying PUCCH_DMRS is independent of a symbol carrying the PUCCH data, and frequency hopping may occur within a slot. PUCCH_Format2_DMRS (1 RB to 16 RBs) and the PUCCH data are frequency-division multiplexed within symbols. Assuming that indexes of subcarriers start from 0, then the indexes of the subcarriers occupied by PUCCH_Format2_DMRS in the frequency domain are 1, 4, 7, 10, ..., which means that one PUCCH_Format2_DMRS exists every three Resource Elements (RE).

In addition to RS type 1, the signals PUSCH_DMRS, PUCCH_Format3_DMRS, and PUCCH_Format4_DMRS also support RS type 2 to make a signal peak-to-average ratio as low as possible in a case where transmission power is limited when UE transmission is carried out at an edge of a cell, and RS sequence generation processes vary with the types.

Allocation of the PTRS in the frequency domain is divided into a DFT-S-OFDM scheme and a CP-OFDM scheme. In the DFT-S-OFDM scheme, based on a difference between $N_{\text{group}}^{\text{PT-RS}}$ and $N_{\text{samp}}^{\text{group}}$, PTRSs are divided into $N_{\text{group}}^{\text{PT-RS}}$ groups within a Bandwidth Part (BWP) allocated to corresponding PUSCHs, and each group includes $N_{\text{samp}}^{\text{group}}$ consecutive PTRSs. In the CP-OFDM scheme, before the frequency domain mapping is performed on the PTRSs, RB resources for PUSCH transmission need to be numbered sequentially from 0 to $N_{\text{RB}}$-1 from a scheduled smallest RB to a scheduled largest RB, and subcarriers corresponding to those RBs need to be numbered sequentially from 0 to $N_{\text{SC}}^{\text{RB}} N_{\text{RB}} - 1$ from a lowest frequency domain in an ascending order. A frequency domain position of a PTRS port includes an RB-level configuration and an RE-level configuration:

$$k = k_{\text{ref}}^{\text{RE}} + (iK_{\text{PT-RS}} + k_{\text{ref}}^{\text{RB}})N_{\text{sc}}^{\text{RB}}$$

$$k_{\text{ref}}^{\text{RB}} = \begin{cases} n_{\text{RNTI}} \bmod K_{\text{PT-RS}} & \text{if} N_{\text{RB}} \bmod K_{\text{PT-RS}} = 0 \\ n_{\text{RNTI}} \bmod (N_{\text{RB}} \bmod K_{\text{PT-RS}}) & \text{otherwise} \end{cases}$$

where $K_{\text{PT-RS}} \in \{2, 4\}$; i=0, 1, 2, ...; and a value of $k_{\text{ref}}^{\text{RE}}$ ranges from 0 to 11. $K_{\text{PT-RS}}$ represents a distribution interval of the PTRSs in the frequency domain in units of RB; $N_{\text{SC}}^{\text{RB}}$ represents the number of subcarriers corresponding to one RB, such as 12, $k_{\text{ref}}^{\text{RE}}$ represents an RE start position of the PTRSs in a frequency domain RB in the CP-OFDM scheme; and $k_{\text{ref}}^{\text{RB}}$ represents an RB start position of the PTRSs in the frequency domain in the CP-OFDM scheme.

When SRSs are within a scheduled specific BWP dedicated to a frequency domain of the SRSs, the SRSs are mapped at intervals of $K_{\text{TC}}$=2/4/8 REs (comb spacing) starting from a particular RE. When allocated in the frequency domain, the PRACH is also continuously mapped from a certain RE.

As found by the applicant of the present disclosure through research, in view of the problems that the generation and resource mapping of the uplink signals involve many scenarios and are complex to implement, the following two solutions are generally adopted. (1) Generation and resource mapping processes of various uplink signals are implemented in a software-based manner by means of Digital Signal Processing (DSP). Although improving the implementation flexibility, the solution (1) is not suitable for software implementation due to long operation time and high resource consumption of related signal processing operations such as random sequence generation and Discrete Fourier Transform (DFT) operations. Even if resources for the DFT operations are used as a separate hardware accelerator, high data traffic for software and hardware interaction is desired to meet the low-latency requirements of 5G, which may increase the implementation cost and the power consumption. (2) Generation and resource mapping processes of various uplink signals are implemented in a hardware-based manner. For example, in different scenarios, by adding caches, all RS data is stored offline in the caches, and, after data signals are generated, mapped to time-frequency resource grids together with the data signals. However, since a plurality of cache units are introduced, the design area may be increased.

In view of the above, in a first aspect, referring to FIG. 2, an embodiment of the present disclosure provides a data processing method, including the following operations S1 and S2.

At operation S1, a type of signal data is determined.

At operation S2, based on the type of the signal data, online processing is performed on the signal data to map the signal data to time-frequency resources for transmission.

In the embodiments of the present disclosure, operations S1 and S2 are implemented in a data processing apparatus. The data processing apparatus may be a fully hardware-based data processing apparatus, and may be in the form of a hardware accelerator, which is not particularly limited in the embodiments of the present disclosure.

In the embodiments of the present disclosure, the signal data may be channel data, such as PUSCH data, PUCCH data, and PRACH data; and the signal data may be RS data, such as PUSCH_DMRS data, PUCCH_DMRS data, PTRS data, and SRS data, which are not particularly limited in the embodiments of the present disclosure.

In the embodiments of the present disclosure, performing online processing on the signal data refers to performing processing such as generation and mapping of the signal data in real time during data transmission. The signal data does not need to be stored offline in a cache unit during the online processing.

The data processing method provided in the embodiments of the present disclosure achieves the online processing of the signal data in a fully hardware-based manner, and can map the signal data online to the time-frequency resources for transmission, which overcomes the problems of long operation time and high resource consumption in a software-based implementation. The online mapping reduces processing delay, does not need addition of a plurality of cache units, reduces the design area, simplifies the design, and facilitates improvements in Performance Power Area (PPA) of products, so that the problems of complex implementation and flexible and varied scenarios for generation and resource mapping of the uplink signals in the field of NR can be solved.

The signal data is not particularly limited in the embodiments of the present disclosure.

In some embodiments, the signal data includes at least one of PUSCH data, PUSCH_DMRS data, PTRS data, PUCCH data, PUCCH_DMRS data, PRACH data, or SRS data.

In some embodiments, when operations S1 and S2 are performed, the signal data is divided into PUSCH/-PUSCH_DMRS/PTRS, PUCCH/PUCCH_DMRS, PRACH, and SRS, and is respectively subjected to online processing.

In the embodiments of the present disclosure, while performing online processing such as online generation and online mapping on the signal data, DFT operations, sequence generation and other processing need to be performed on the signal data. In the embodiments of the present disclosure, the fully hardware-based data processing apparatus is provided with DFT resources for the DFT operations, and further provided with sequence generation resources for generating sequences corresponding to the signal data.

In the embodiments of the present disclosure, DFT resources corresponding to the channel data such as the PUSCH data and DFT resources corresponding to the RS data such as the PUCCH_DMRS data may be respectively provided in the data processing apparatus, or the channel data such as the PUSCH data and the RS data such as the PUCCH_DMRS data may be allowed to multiplex the DFT resources in the data processing apparatus, which is not particularly limited in the embodiments of the present disclosure.

In the embodiments of the present disclosure, sequence generation resources may be provided in the data processing apparatus corresponding to the PUSCH_DMRS data, the PUCCH_DMRS data, the PTRS data, and the SRS data, respectively, or the PUSCH_DMRS data, the PUCCH_DMRS data, the PTRS data, and the SRS data may be allowed to multiplex the sequence generation resources, which is not particularly limited in the embodiments of the present disclosure.

In some embodiments, when online processing is performed on at least one of the PUSCH data, the PUSCH_DMRS data, the PTRS data, the PUCCH data, the PUCCH_DMRS data, the PRACH data, or the SRS data, DFT resources and/or sequence generation resources are multiplexed.

In the embodiments of the present disclosure, multiplexing the DFT resources and/or the sequence generation resources can reduce the design area of products, simplify the design, facilitate improvements in the PPA of products, and save the cost of products.

In some embodiments, the signal data includes channel data and RS data; and when online processing is performed on the channel data and the RS data, generation of the RS data is initiated in advance by a preset number of clock cycles so that the signal data is aligned with the RS data in terms of timing sequence.

In some embodiments, for the signal data such as the PUSCH data/the PUSCH_DMRS data/the PTRS data, performing online processing on the signal data based on the type of the signal data includes: performing online processing on the signal data based on an uplink transmission scheme and the type of the signal data.

In the embodiments of the present disclosure, the uplink transmission scheme may be the CP-OFDM or the DFT-S-OFDM, which is not particularly limited in the embodiments of the present disclosure. Different schemes may support different RB mapping types, frequency domain mapping types, and generation and mapping processes of the signal data.

In some embodiments, the uplink transmission scheme includes the DFT-S-OFDM, the signal data includes the PUSCH data; and performing online processing on the signal data based on the uplink transmission scheme and the type of the signal data includes: preprocessing the PUSCH data; performing DFT operations on the preprocessed PUSCH data; and mapping the PUSCH data subjected to the DFT operations to the time-frequency resources online based on the uplink transmission scheme.

In the embodiments of the present disclosure, for the RB mapping type, only type 1 is supported in a case where the uplink transmission scheme is the DFT-S-OFDM.

In the embodiments of the present disclosure, preprocessing the PUSCH data includes, but is not limited to, performing processing procedures such as encoding, rate matching, and data multiplexing, and processing the processed bit-level data by scrambling, modulation, layer mapping, and the like.

In the embodiments of the present disclosure, zero padding needs to be performed on a time-frequency resource grid corresponding to a non-scheduled RB when the PUSCH data is mapped online to the time-frequency resources. In the embodiments of the present disclosure, zero padding may be performed online in the process of mapping the PUSCH data subjected to the DFT operations to the time-frequency resources; or, after the DFT operations, 0 data corresponding to the non-scheduled RB may be introduced first, and then the mapping to the time-frequency resources is performed, which is not particularly limited in the embodiments of the present disclosure.

Accordingly, in some embodiments, mapping the PUSCH data subjected to the DFT operations to the time-frequency resources online based on the uplink transmission scheme includes: mapping the PUSCH data subjected to the DFT operations to the time-frequency resources online based on the uplink transmission scheme, a configured RB start position, and the number of RBs; performing online padding with 0 data on the time-frequency resources corresponding to a non-scheduled RB, or adding 0 data corresponding to the non-scheduled RB; and mapping the PUSCH data subjected to the DFT operations to the time-frequency resources online based on the uplink transmission scheme, the configured RB start position, and the number of RBs.

In the embodiments of the present disclosure, by introducing the 0 data corresponding to the non-scheduled RB first after the DFT operations, a process of determining the 0 data corresponding to the non-scheduled RB during the online mapping is simplified, and the implementation difficulty is reduced.

In some embodiments, the uplink transmission scheme includes the DFT-S-OFDM, and the signal data includes the PUSCH_DMRS data; and performing online processing on the signal data based on the uplink transmission scheme and the type of the signal data includes: generating the PUSCH_DMRS data online based on the uplink transmission scheme and the number of scheduled RBs, and mapping the PUSCH_DMRS data to the time-frequency resources online based on a configured CDM group value cdm_group and a no-data CDM group value cdm_group_no_data.

In the embodiments of the present disclosure, for the frequency domain mapping type, merely configuration type 1 is supported in a case where the uplink transmission scheme is the DFT-S-OFDM.

The generated PUSCH_DMRS data may be a Zaddoff Chu (ZC) sequence or a pseudo-random Gold sequence, which is not particularly limited in the embodiments of the present disclosure.

In some embodiments, the uplink transmission scheme includes the DFT-S-OFDM, and the signal data includes the PTRS data; and performing online processing on the signal data based on the uplink transmission scheme and the type of the signal data includes: generating the PTRS data online based on the uplink transmission scheme and the number of scheduled RBs, and mapping the PTRS data to the time-frequency resources online based on the uplink transmission scheme, the number of groups within a BWP allocated to corresponding PUSCHs (i.e., $N_{\text{group}}^{\text{PT-RS}}$ ), a number of consecutive PTRS data items in each group (i.e., $N_{\text{samp}}^{\text{group}}$ ), and the number of scheduled PUSCH subcarriers.

In some embodiments, mapping the PTRS data to the time-frequency resources online based on the uplink transmission scheme, the number of groups within the BWP allocated to the corresponding PUSCHs, the number of consecutive PTRS data items in each group, and the number of scheduled PUSCH subcarriers includes: deducing a starting address of the PTRS data in the frequency domain based on the uplink transmission scheme, the number of groups within the BWP allocated to the corresponding PUSCHs, the number of consecutive PTRS data items in each group, and the number of scheduled PUSCH subcarriers, or acquiring a configured starting address of the PTRS data in the frequency domain; determining a mapping position of the PTRS data based on the starting address of the PTRS data in the frequency domain and the number of consecutive PTRS data items in each group; and mapping the PTRS data to the time-frequency resources online based on the mapping position.

For example, based on the uplink transmission scheme configured by software, the type of the current signal data, $N_{\text{group}}^{\text{PT-RS}}$ , $N_{\text{samp}}^{\text{group}}$ , and the number of scheduled PUSCH subcarriers, eight start position indexes of the PTRS data are deduced based on the fact that the maximum value of $N_{\text{group}}^{\text{PT-RS}}$ is 8. Or, eight starting addresses may be directly configured by software, and then $N_{\text{samp}}^{\text{group}}$ addresses are added based on a value of $N_{\text{samp}}^{\text{group}}$ , thereby obtaining mapping positions of the PTRS data.

In some embodiments, the uplink transmission scheme includes CP-OFDM, and the signal data includes the PUSCH data; and performing online processing on the signal data based on the uplink transmission scheme and the type of the signal data includes: preprocessing the PUSCH data, and mapping the PUSCH data to the time-frequency resources online based on the uplink transmission scheme and an RB mapping type.

In the embodiments of the present disclosure, for the RB mapping type, type 1 and type 2 are supported in a case where the uplink transmission scheme is the CP-OFDM.

In a case where the uplink transmission scheme is the CP-OFDM, precoding may be directly performed with the DFT operations skipped.

In some embodiments, mapping the PUSCH data to the time-frequency resources online based on the uplink transmission scheme and the RB mapping type includes: determining, in a case where the RB mapping type is type 0, a scheduled RB based on a configured bitmap signal; and determining, in a case where the RB mapping type is type 1, the scheduled RB based on a configured RB start position and the number of RBs; and mapping the PUSCH data to the scheduled RB online.

For example, in the case of type 0, the scheduled RBs within a BWP are indicated by a bitmap signal configured by software, where each RB corresponds to one bit of the bitmap signal, and it may be set that 1 indicates valid and 0 indicates invalid. In the case of type 1, the scheduled PUSCH RB is deduced based on the RB start position configured by software and the number of RBs.

In the embodiments of the present disclosure, based on the BWP, the corresponding precoded data is mapped to the scheduled PUSCH RBs online, and a non-scheduled RB within the BWP is set to 0 online. In the embodiments of the present disclosure, 0 data corresponding to the non-scheduled RB is added in a scrambling stage, or the 0 data corresponding to the non-scheduled RB may be introduced in the stages of modulation, layer mapping, precoding and the like, or other equivalent methods may be adopted, which is not particularly limited in the embodiments of the present disclosure.

Accordingly, in some embodiments, performing online processing on the signal data based on the uplink transmission scheme and the type of the signal data further includes: introducing 0 data corresponding to a non-scheduled RB in a stage of preprocessing the PUSCH data; or, performing online padding with 0 data on the non-scheduled RB in a stage of mapping the PUSCH data to the time-frequency resources online.

In some embodiments, the uplink transmission scheme includes the CP-OFDM, and the signal data includes the PUSCH_DMRS data; and performing online processing on the signal data based on the uplink transmission scheme and the type of the signal data includes: generating the PUSCH_DMRS data online based on a frequency domain mapping type, and mapping the PUSCH_DMRS data to the time-frequency resources online based on the frequency domain mapping type, a configured CDM group value, and a no-data CDM group value.

In the embodiments of the present disclosure, for the frequency domain mapping type, configuration type 1 and configuration type 2 are both supported in a case where the uplink transmission scheme is the CP-OFDM.

In some embodiments, generating the PUSCH_DMRS data online based on the frequency domain mapping type includes: generating, in a case where the frequency domain mapping type is configuration type 1, the PUSCH_DMRS data online based on the uplink transmission scheme and the number of scheduled RBs; and generating, in a case where the frequency domain mapping type is configuration type 2, the PUSCH_DMRS data through a look-up table when a length of the PUSCH_DMRS data is less than a preset length, and generating the PUSCH_DMRS data by performing recursion based on a preset step when the length of the PUSCH_DMRS data is greater than or equal to the preset length.

For example, in the case of configuration type 1, the PUSCH_DMRS data is mainly classified into a ZC sequence or a pseudo-random Gold sequence based on different uplink transmission schemes and different numbers of scheduled RBs. In the case of configuration type 2, the PUSCH_DMRS data is generated in different manners based on different numbers of scheduled RBs When the length of the RS is less than 30, the RS is generated through a look-up table; and when the length of the RS is greater than or equal to 30, a base sequence under each index is generated online by performing recursion based on a step = 1.

In the embodiments of the present disclosure, in the case of configuration type 2, the generation of the PUSCH_DMRS data further includes DFT operations, where the number of DFT points is a multiple of 6. In the embodiments of the present disclosure, the DFT operations may be implemented with independent DFT hardware resources, or may be implemented by multiplexing DFT resources corresponding to the PUSCH data, which is not particularly limited in the embodiments of the present disclosure.

When the DFT operations during the generation of the PUSCH_DMRS data are implemented by multiplexing the DFT resources corresponding to the PUSCH data, since the number of DFT resource points corresponding to the PUSCH data is a multiple of 12, the number of DFT points supported in such a scenario is smaller. Therefore, when the DFT operations are implemented, a DMRS base sequence output in the scenario is first interpolated by a factor of 2 to enable a length of the sequence to be a multiple of 12, and after the DFT resources are input, the outputs corresponding to a first half of the DFT points are taken as a DFT output result of DMRS, thereby saving the implementation cost.

In the embodiments of the present disclosure, in the case of configuration type 2, zero padding may be performed online in the process of mapping the PUSCH_DMRS data subjected to the DFT operations to the time-frequency resources; or, after the DFT operations, 0 data corresponding to a non-scheduled RB may be introduced before the mapping to the time-frequency resources, which is not particularly limited in the embodiments of the present disclosure.

In the embodiments of the present disclosure, when the PUSCH_DMRS base sequence is generated online, the resources for the generation of the base sequence may be multiplexed to the greatest extent by comprehensively considering the characteristics of a PUSCH_DMRS sequence, a PUCCH_DMRS sequence, a PTRS sequence, and an SRS sequence, which can reduce the design area and save the cost. The generation of each RS sequence may be implemented separately, which is not particularly limited in the embodiments of the present disclosure.

In some embodiments, the uplink transmission scheme includes the CP-OFDM, and the signal data includes the PTRS data; and performing online processing on the signal data based on the uplink transmission scheme and the type of the signal data includes: generating the PTRS data online based on a frequency domain mapping type, and mapping the PTRS data to the time-frequency resources online based on a configured count enable signal, mapping parameters, a first counter, and a second counter. The first counter is configured to count the scheduled REs, and the second counter is configured to count the scheduled REs of each layer.

For example, in the CP-OFDM scheme, the PTRS is subjected to resource allocation and RE counting at a specific sampling rate based on the maximum number of RBs within a BWP. When the resource allocation and the RE counting are implemented, in addition to the RE counting based on the whole BWP, another RE counter is needed to record only serial numbers of the scheduled valid PUSCH REs. In the embodiments of the present disclosure, an enable signal for the PTRS at each layer, an RE start position of the PTRS at each layer ( $k_{ref}^{RB} \cdot N_{SC}^{RB} + k_{ref}^{RE}$ ) and parameters such as a frequency domain spacing $K_{PT\text{-}RS}$ of the PTRS are configured by software, and hardware takes each software-configured RB valid indication signal as a valid PUSCH RE count enable signal. When the counter counts to a current layer $(k_{ref}^{RB} + i \cdot K_{PT\text{-}RS}) \cdot N_{SC}^{RB} + k_{ref}^{RE}$ , i=0, 1, 2, ..., the PTRS is inserted; and if the counter counts to a PTRS position of another layer, 0 is inserted to the corresponding position; otherwise, the PUSCH data is inserted to other REs online. The distribution of PTRSs in the frequency domain is relatively sparse when $K_{PT\text{-}RS}$ =2 or 4, and the number of PTRSs in each symbol within the BWP is relatively small. In a specific implementation, two counters are provided: a first counter counts the number of valid REs (numbered from 0), and is reset when counting to the number of subcarriers for a current symbol; and a second counter counts REs across a step of $K_{PT\text{-}RS} \cdot N_{SC}^{RB}$ when the counted number of valid REs of the first counter is greater than or equal to the RE start position of the PTRS at each layer. $K_{PT\text{-}RS}$ represents a distribution spacing of the PTRSs in the frequency domain in units of RB; $N_{SC}^{RB}$ represents the number of subcarriers corresponding to one RB, such as 12; $k_{ref}^{RE}$ represents an RE start position of the PTRSs in an RB in the frequency domain in the CP-OFDM scheme; and $k_{ref}^{RB}$ represents an RB start position of the PTRSs in the frequency domain in the CP-OFDM scheme.

In some embodiments, the PTRS data may be cached offline and then mapped online together with the PUSCH data, which is easy to control.

In some embodiments, for the signal data such as the PUCCH data/the PUCCH_DMRS data, performing online processing on the signal data based on the type of the signal data includes: performing online processing on the signal data based on the type of the signal data and a configured PUCCH format.

In some embodiments, the signal data includes the PUCCH data or the PUCCH_DMRS data; and performing online processing on the signal data based on the type of the signal data and the configured PUCCH format includes: generating, in a case where the configured PUCCH format is PUCCH format 3 or PUCCH format 4, the PUCCH data or the PUCCH_DMRS data online based on an RB mapping type, and mapping the PUCCH data or the PUCCH_DMRS data to the time-frequency resources online based on a configured RB start position and the number of RBs, and mapping, in a case where the configured PUCCH format is neither the PUCCH format 3 nor the PUCCH format 4, the PUCCH data or the PUCCH_DMRS data to the time-frequency resources online based on the configured RB start position and the number of RBs.

For example, in a case where the configured PUCCH format of the PUCCH data/the PUCCH_DMRS data is PUCCH_DMRS_Format 3/PUCCH_DMRS_Format 4, in the case of configuration type 2, a signal length is a multiple of 12, and the maximum number of points is 16×12. In some embodiments, the DFT operations needed during the online generation of the PUCCH _DMRS data multiplex DFT resources corresponding to the PUSCH, which can save the implementation cost. In the case of configuration type 1, online generation of a PUCCH_DMRS sequence also multiplexes sequence generation resources corresponding to the PUSCH_DMRS. Based on the different formats, the PUCCH_DMRS occupies 1 RB to 16 RBs in the frequency domain. In some embodiments, the PUCCH _DMRS sequence may be generated offline and finally mapped online together with the PUCCH data.

In a case where the configured PUCCH format of the PUCCH data/the PUCCH_DMRS data is neither PUCCH_DMRS_Format 3 nor PUCCH_DMRS_Format 4, the PUCCH data or the PUCCH_DMRS data in the related format may be generated and mapped online based on the RB start position configured by software and the number of RBs, and the generation of the PUCCH_DMRS data may also multiplex the sequence generation resources corresponding to the PUSCH_DMRS.

In some embodiments, the signal data includes the PRACH data; and performing online processing on the signal data based on the type of the signal data includes: performing DFT operations on the PRACH data by means of recursion and a look-up table; and mapping the PRACH data subjected to the DFT operations to the time-frequency resources online based on a configured long-code/short-code indication signal.

In some embodiments, the signal data includes the SRS data; and performing online processing on the signal data based on the type of the signal data includes: mapping the SRS data to the time-frequency resources online based on a configured RB start position, an RE start position, and a comb spacing.

In a second aspect, referring to FIG. 3, an embodiment of the present disclosure provides a data processing apparatus, including: a classification unit 101 configured to determine a type of signal data; and a processing unit 102 configured to perform, based on the type of the signal data, online processing on the signal data to map the signal data to time-frequency resources for transmission.

In the embodiments of the present disclosure, the data processing apparatus is a fully hardware-based device, and may be in the form of a hardware accelerator, which is not particularly limited in the embodiments of the present disclosure.

In the embodiments of the present disclosure, the signal data may be channel data, such as PUSCH data, PUCCH data, and PRACH data; and the signal data may be RS data, such as PUSCH_DMRS data, PUCCH_DMRS data, PTRS data, and SRS data, which is not particularly limited in the embodiments of the present disclosure.

In the embodiments of the present disclosure, performing online processing on the signal data refers to performing processing such as generation and mapping of the signal data in real time during data transmission. The signal data does not need to be stored offline in a cache unit during the online processing.

The data processing apparatus provided in the embodiments of the present disclosure achieves the online processing of the signal data in a fully hardware-based manner, and can map the signal data online to the time-frequency resources for transmission, which overcomes the problems of long operation time and high resource consumption in a software-based implementation. The online mapping reduces processing delay, does not need addition of a plurality of cache units, reduces the design area, simplifies the design, and facilitates improvements in PPA of products, so that the problems of complex implementation and flexible and varied scenarios for generation and resource mapping of the uplink signals in the field of NR can be solved.

In some embodiments, the signal data includes at least one of PUSCH data, PUSCH_DMRS data, PTRS data, PUCCH data, PUCCH_DMRS data, PRACH data, or SRS data.

In the embodiments of the present disclosure, while performing online processing such as online generation and online mapping on the signal data, DFT operations, sequence generation and other processing need to be performed on the signal data. In the embodiments of the present disclosure, the fully hardware-based data processing apparatus is provided with DFT resources for the DFT operations, and further provided with sequence generation resources for generating a sequence corresponding to the signal data.

In the embodiments of the present disclosure, DFT resources corresponding to the channel data such as the PUSCH data and DFT resources corresponding to the RS data such as the PUCCH_DMRS data may be respectively provided in the data processing apparatus, or the channel data such as the PUSCH data and the RS data such as the PUCCH_DMRS data may be allowed to multiplex the DFT resources in the data processing apparatus, which is not particularly limited in the embodiments of the present disclosure.

In the embodiments of the present disclosure, sequence generation resources may be provided in the data processing apparatus corresponding to the PUSCH_DMRS data, the PUCCH_DMRS data, the PTRS data, and the SRS data, respectively, or the PUSCH_DMRS data, the PUCCH_DMRS data, the PTRS data, and the SRS data may be allowed to multiplex the sequence generation resources, which is not particularly limited in the embodiments of the present disclosure.

Accordingly, in some embodiments, the processing unit 102 includes DFT resources and sequence generation resources.

The DFT resources and/or the sequence generation resources are multiplexed when the processing unit 102 performs online processing on at least one of the PUSCH data, the PUSCH_DMRS data, the PTRS data, the PUCCH data, the PUCCH_DMRS data, the PRACH data, or the SRS data.

In the embodiments of the present disclosure, multiplexing the DFT resources and/or the sequence generation resources can reduce the design area of products, simplify the design, facilitate improvements in the PPA of products, and save the cost of products.

In some embodiments, the signal data includes channel data and RS data; and when the processing unit 102 performs online processing on the channel data and the RS data, generation of the RS data is initiated in advance by a preset number of clock cycles so that the signal data is aligned with the RS data in terms of timing sequence.

In a third aspect, referring to FIG. 4, an embodiment of the present disclosure provides a data processing apparatus, including: one or more processing units 201; and a storage unit 202 having stored thereon one or more programs which, when executed by the one or more processing units, cause the one or more processing units to implement the data processing method described in the first aspect of the embodiments of the present disclosure.

In a fourth aspect, an embodiment of the present disclosure provides a computer readable medium having stored thereon a computer program which, when executed by a processor, implements the data processing method described in the first aspect of the embodiments of the present disclosure.

In order to enable those of ordinary skill in the art to understand the technical solutions provided in the embodiments of the present disclosure more clearly, the technical solutions provided in the embodiments of the present disclosure are illustrated in detail below through specific embodiments.

First Embodiment

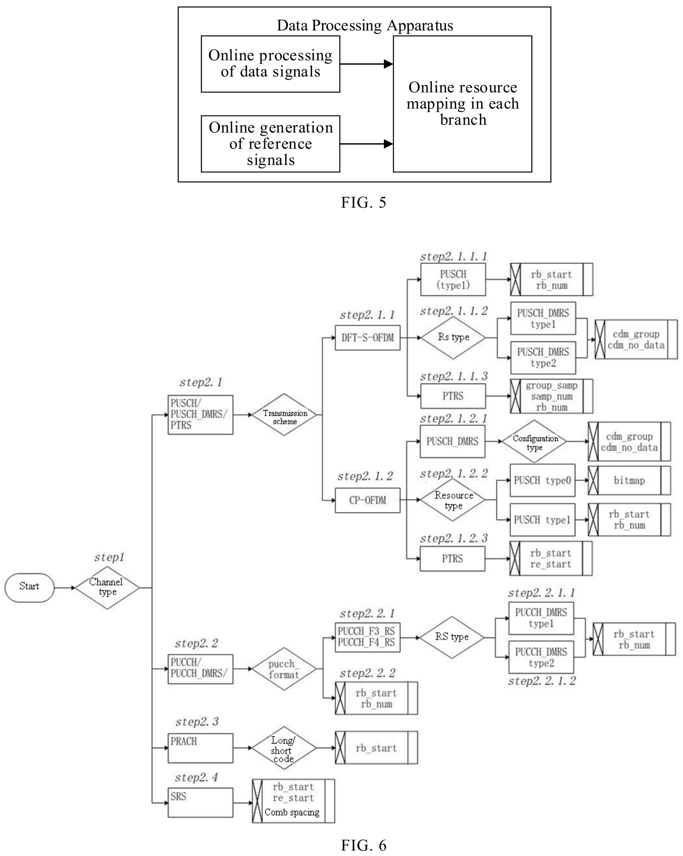

As shown in FIG. 5, the processing performed by the data processing apparatus provided in the present embodiment is mainly divided into three major parts:

1) online generation of the RSs, including generation of the PUSCH_DMRS sequence, the PTRS sequence, the PUCCH _DMRS sequence, and the SRS sequence and subsequent generation of the RSs in each transmission scheme and each scenario;
2) online processing of data signals, including transmission processing procedures of the PUSCH, the PUCCH, and the PRACH before resource mapping, which include operation procedures such as scrambling, modulation, layer mapping, DFT operations, and precoding; and
3) online resource mapping in each branch, including performing online resource mapping on the signals generated in 1) and 2) based on a type of each RE on resource grids.

In the present embodiment, online sequence generation and online mapping are respectively performed by distinguishing between the PUSCH/the PUSCH_DMRS/the PTRS, the PUCCH/the PUCCH_DMRS, the PRACH, and the SRS based on the channel type. If a relevant RS is involved when any part is mapped, generation of the RS needs to be initiated in advance by multiple beats, so as to ensure that the generated RS is aligned with the data in terms of timing sequence.

Second Embodiment

As shown in FIG. 6, a data processing method corresponding to uplink online resource mapping in the present embodiment mainly includes two main steps, i.e., step 1 and step 2.

At step 1, a type of signal data is determined, so as to respectively perform online processing based on different types of signal data. Types of signal data are mainly divided into the PUSCH/the PUSCH_DMRS/the PTRS, the PUCCH/the PUCCH_DMRS, the PRACH, and the SRS.

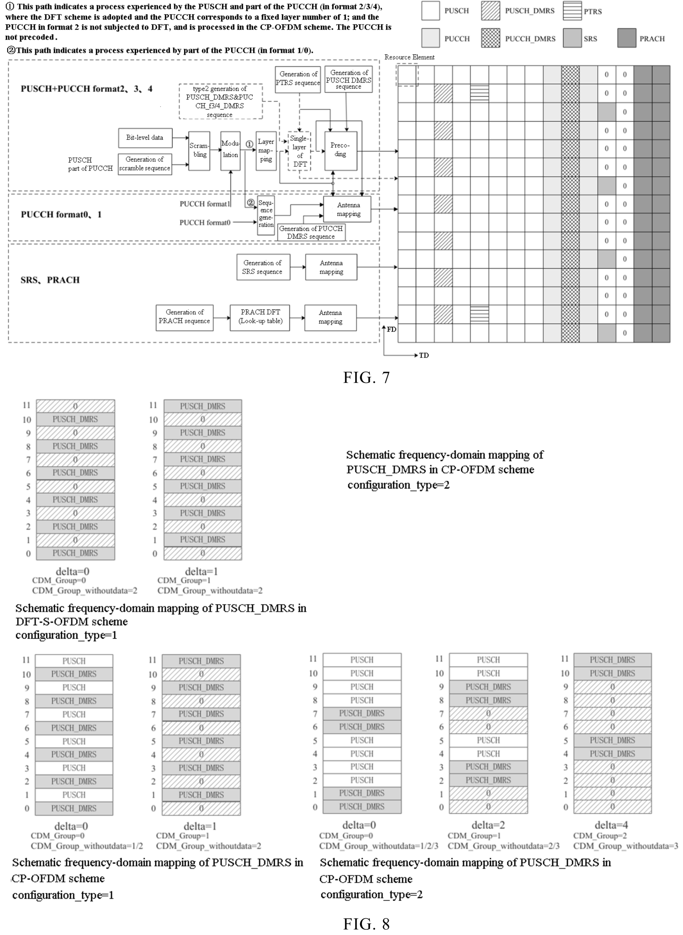

At step 2, sequence generation and related processing of the signal data before resource mapping are both performed online in real time, and the mapping is also performed online, as shown in FIG. 7.

Based on the different types of data, step 2 may be divided into four sub-steps, i.e., steps 2.1 to 2.4.

Step 2.1: online generation and online resource mapping of the PUSCH/the PUSCH_DMRS/the PTRS, including:

1) PUSCH

During online processing and resource mapping of the PUSCH data, bit-level data obtained after the processing procedures of encoding, rate matching, and data multiplexing are subjected to scrambling, modulation, and layer mapping. In the DFT-S-OFDM transmission scheme (step 2.1.1->step 2.1.1.1), the DFT operations are further needed to be performed, and only type 1 is supported as a PUSCH resource mapping type in this branch. The data obtained after the DFT operations are subjected to online mapping based on the RB start position configured by software and the number of RBs. Since DFT hardware processing causes a large delay, it is difficult to perform zero padding on resource grids of the non-scheduled PUSCH RB at this time. Preferably, 0 data corresponding to an invalid RB is introduced after the DFT operations, which is simple to implement, and greatly simplifies the determination of the 0 data corresponding to the invalid RB during the online mapping.

In the CP-OFDM transmission scheme (step 2.1.2->step 2.1.2.2), precoding may be directly performed with the DFT operations skipped. During the resource mapping, type 0 and type 1 are supported as PUSCH resource mapping types in this scenario. In the case of type 0, the scheduled RBs within the BWP are indicated by a bitmap signal configured by software, where each RB corresponds to one bit of the bitmap signal, and it may be set that 1 indicates valid and 0 indicates invalid. In the case of type 1, the scheduled PUSCH RB is deduced based on the RB start position configured by software and the number of RBs. Based on the BWP, the corresponding precoded data is mapped to the scheduled PUSCH RBs online, and a non-scheduled RB within the BWP is set to 0 online. When the present embodiment is specifically implemented, the 0 data corresponding to the invalid RB is added in the scrambling stage, or the 0 data corresponding to the invalid RB may be introduced in the stages of modulation, layer mapping, precoding and the like, or other equivalent solutions may be adopted.

2) PUSCH_DMRS

Based on the different uplink transmission schemes, configuration type 1 and configuration type 2 are supported as the frequency domain mapping types of PUSCH_DMRS. Online mapping procedures of the PUSCH_DMRS in the present embodiment are as shown by step 2.1.1.2 and step 2.1.2.1 in FIG. 6, and frequency domain distributions of PUSCH_DMRSs in the different transmission schemes and different specific scenarios are as shown in FIG. 8.

In the DFT-S-OFDM transmission scheme, merely configuration type 1 is supported as the frequency domain mapping type of the PUSCH_DMRS, and the PUSCH_DMRS is placed on a corresponding RE based on a value of cdm_group and a value of cdm_group_no _data configured by software, while other REs are set to 0.

In the CP-OFDM transmission scheme, configuration type 1 and configuration type 2 are supported as the frequency domain mapping types of PUSCH_DMRS. Based on the different frequency domain mapping types, the PUSCH_DMRS is placed on a corresponding RE based on a value of cdm_group and a value of cdm_group_no_data configured by software, while other REs are padded with the PUSCH data or set to 0, as shown in FIG. 8.

Based on the different uplink transmission schemes, there are two scenarios for the PUSCH_DMRS, i.e., a scenario of merely the DMRS and a scenario of frequency division multiplexing of the PUSCH data and the DMRS, each of which involves generation of a DMRS sequence.

In the case of RS type 1, the PUSCH_DMRS is mainly a ZC sequence or a pseudo-random Gold sequence based on the different transmission schemes and different numbers of scheduled PUSCH RBs. According to the present embodiment, the PUSCH _DMRS of RS type 1 is generated online, which causes a low hardware processing delay and can be implemented in a small area.

In the case of RS type 2, the PUSCH _DMRS is generated in different ways based on different numbers of scheduled PUSCH RBs. When the signal length of the RS is less than 30, the present embodiment is implemented through a look-up table according to the 3GPP NR protocol; and when the signal length is greater than or equal to 30, a base sequence under each index is generated online by performing recursion based on a step = 1. The signal generation process further includes DFT operations, with the number of DFT points being a multiple of 6. If the DFT operations are implemented with a DFT hardware logic alone, the area of the DFT hardware logic is relatively large. Since the DFT logic for the processing procedures of the PUSCH is idle in this scenario, preferably, in the case of RS type 2, the DFT operations needed in the generation process of the PUSCH_DMRS are implemented in the present embodiment by multiplexing the aforesaid DFT (with the number of points satisfies a multiple of 12) resources corresponding to the PUSCH. Since the number of DFT points supported in this scenario is smaller, when the DFT operations are implemented, the DMRS base sequence output in this scenario is first interpolated by a factor of 2 to enable the length of the sequence to be a multiple of 12, and after the DFT resources are input, the output corresponding to a first half of the DFT points is taken as a DFT output result of the DMRS, which can greatly save the implementation cost. The DFT logic for RS type 2 may also be implemented independently with a relatively large area. Due to a relatively high hardware processing delay during the online generation for RS type 2, to simplify the design, a mapping scheme in which 0 data corresponds to invalid RBs, the same as the above scheme for the PUSCH, is adopted.

Other RS base sequences may include ZC sequences or Gold sequences. In the present embodiment, when the PUSCH_DMRS base sequence is generated online, the resources for the generation of the base sequence are multiplexed to the greatest extent by comprehensively considering the characteristics of the PUSCH_DMRS sequence, the PUCCH_DMRS sequence, the PTRS sequence, and the SRS sequence, so as to save the cost. Equivalently, generation of each RS sequence may be implemented independently with a relatively large area.

3) PTRS

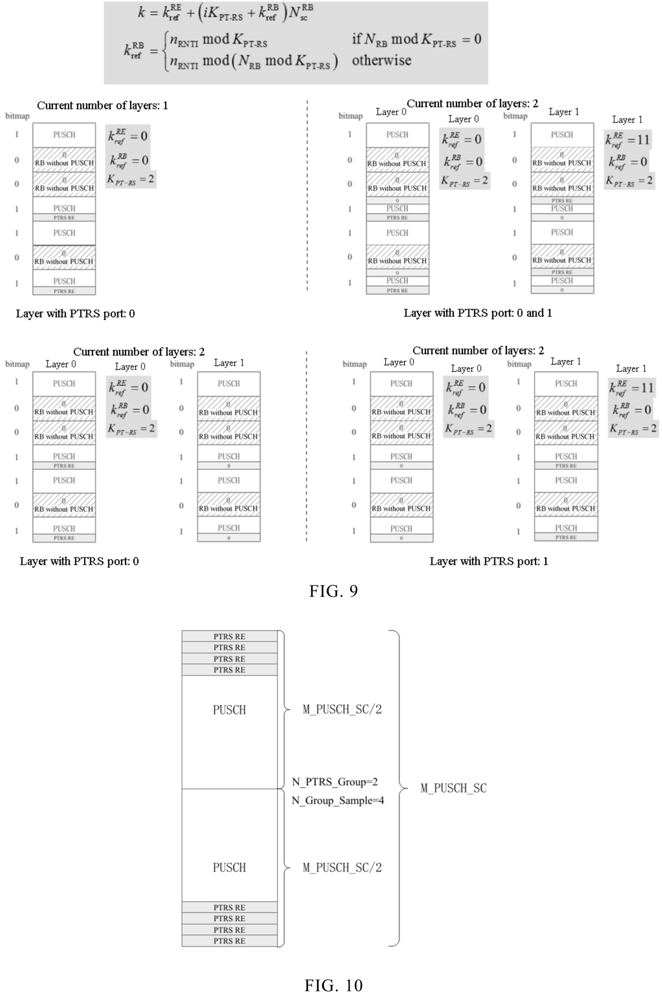

Resource mapping of the PTRS is divided into the CP-OFDM scheme and the DFT-S-OFDM scheme, and control procedures in the resource mapping of the PTRS are as shown at step 2.1.1.3 and step 2.1.2.3 in FIG. 6. The generation of PTRS may refer to the above generation solution of PUSCH_DMRS. In the DFT-S-OFDM scheme, distribution of PTRSs in the frequency domain follows the following rule: based on the difference between $N_{group}^{PT-RS}$ and $N_{samp}^{group}$, the PTRSs are divided into $N_{group}^{PT-RS}$ groups within the BWP allocated to the corresponding PUSCHs, and each group includes $N_{samp}^{group}$ consecutive PTRSs. The specific distribution rule of PTRSs can be found in 38.211 Table 6.4.1.2.2.2-1 in the 3GPP protocol, and FIG. 10 is a schematic diagram of a frequency domain distribution mode. In the present embodiment, based on the uplink transmission scheme configured by software, the current symbol channel type, $N_{group}^{PT-RS}$, $N_{samp}^{group}$, and the number of scheduled PUSCH subcarriers, start position indexes of 8 PTRSs are deduced based on the fact that the maximum value of $N_{group}^{PT-RS}$ is 8. Alternatively, the eight starting addresses may be directly configured by software, and then $N_{samp}^{group}$ addresses are added based on a value of $N_{samp}^{group}$ to obtain the mapping position of the PTRSs.

In the CP-OFDM scheme, the PTRS is subjected to resource allocation and RE counting at a specific sampling rate based on the maximum number of RBs within the BWP. When the present embodiment is implemented, in addition to the RE counting based on the whole BWP, another RE counter is needed to count only RE serial numbers in the scheduled valid PUSCHs. In the present embodiment, the enable signal for the PTRS at each layer, the RE start position of the PTRS at each layer ( $k_{ref}^{RB} \cdot N_{SC}^{RB} + \tilde{k}_{ref}^{RE}$ ) and parameters such as the frequency domain spacing $K_{PT\text{-}RS}$ of the PTRS are configured by software, while hardware takes the software-configured valid indication signal for each RB as the valid PUSCH RE count enable signal. When the counter counts the current layer $(k_{ref}^{RB} + i \cdot K_{PT\text{-}RS}) \cdot N_{SC}^{RB} + k_{ref}^{RE}$ , i=0, 1, 2, ..., the PTRS is inserted; and if the counter counts a PTRS position of another layer, 0 is inserted to the corresponding position; otherwise, the PUSCH data is inserted to other REs online. The distribution of PTRSs in the frequency domain is relatively sparse when $K_{PT\text{-}RS}$ =2 or 4, and the number of PTRSs in each symbol within the BWP is relatively small, as shown in FIG. 9. In a specific implementation, two counters are provided:

a) the first counter counts the number of valid REs (numbered from 0), and is reset when counting to the number of subcarriers for a current symbol; and

b) the second counter counts REs across the step of $K_{PT\text{-}RS} \cdot N_{SC}^{RB}$ when a count value of the number of valid REs of the first counter is greater than or equal to the RE start position of the PTRS at each layer.

In another implementation, the PTRS data may be cached offline and then mapped online together with the PUSCH data, which is easy to control, but involves slightly higher overall cost than the implementation adopted in the present embodiment.

In summary, some REs in the symbol may include RSs such as the DMRS and the PTRS, and when read control encounters the REs corresponding to these RSs during the online mapping, read of the PUSCH data needs to be suspended, and the RSs need to be generated online and output. Frequency domain positions of the PTRS and the PUSCH_DMRS may vary in different layers, and mapping time points may also vary. Therefore, the PTRS sequence and the PUSCH_DMRS sequence are respectively generated based on layers, and the generation is initiated in advance by several clock cycles.

Step 2.2: resource mapping of PUCCH/the PUCCH_DMRS

The PUCCH and the corresponding PUCCH_DMRS are divided into frequency division multiplexing (PUCCH_Format 2) and time division multiplexing (other PUCCH formats) based on different PUCCH_Format configured by software, and RS type 1 and RS type 2 are both supported for PUCCH_DMRS_Format 3/PUCCH_DMRS_Format 4.

In the solution described in the present embodiment, the PUCCH&DMRS is processed in two ways (step 2.2.1 and step 2.2.2) based on whether the PUCCH&DMRS is in PUCCH_DMRS _Format 3 or /PUCCH_DMRS_Format 4.

For step 2.2.1, in the case of RS type 2, the signal length satisfies a multiple of 12, and the maximum number of points is 16×12. Preferably, the DFT operations needed during the online generation of the PUCCH_DMRS directly multiplex the DFT resources corresponding to the above PUSCH, which can greatly save the implementation cost. In the case of RS type 1, online generation of the PUCCH_DMRS sequence also multiplexes the RS sequence generation logic for the generation of the above PUSCH_DMRS sequence. Based on different formats, the PUCCH_DMRS occupies 1 RB to 16 RBs in the frequency domain. In another equivalent implementation, the sequence may be generated offline and finally mapped online together with the PUCCH data, but the cost of the equivalent implementation is slightly higher.

For step 2.2.2, the PUCCH data or the RS in the related format is simply generated and mapped online based on the RB start position configured by software and the number of RBs, and the generation of the RS also multiplexes the above RS sequence generation logic.

Step 2.3: resource mapping of PRACH

Before the PRACH is subjected to resource mapping, a 139/839-point DFT operation needs to be performed on an intermediate sequence of the PRACH based on a difference between a long code and a short code, as described in the following formula in the protocol:

$$y_{u,v}(n) = \sum_{m=0}^{L_{RA}-1} x_{u,v}(m) \cdot e^{-j\frac{2\pi mn}{L_{RA}}}$$

Based on the characteristics of the above formula for the PRACH preamble sequence, fast Fourier transform cannot be directly performed since the number of points is 139 or 839, and it is complex to implement an internal butterfly operation. In order to solve these problems and considering the particularity of the ZC sequence, a look-up table is adopted based on a recursive formula to avoid the complex DFT operations, which is easy to implement. The general idea is as follows:

assuming that a DFT operation of $x_{u,v}(n)$ is $X_{u,v}[k]$, then generation of $x_{u,v}(n)$ and the DFT operation thereof may be obtained by:

$$X_{u,v}\left[\bar{k}\right] = X_{u,v}[k-1] * Z_{u,v}\left[\bar{k-1}\right]$$

where $X_{u,v}[0] = S_u = \sum_{n=0}^{L_{RA}-1} x_u(n)$ , and after a series of derivations, the above formula is transformed into:

$$X_{u,v}\left[k\right] = S_u * e^{j\frac{2\pi}{L_{RA}}*m_{u,v}[k]}$$

where

$$m_{u,v}\left[k\right] = \left\{m_{u,v}\left[k-1\right] + l_{u,v}\left[k-1\right]\right\}\%L_{RA} , \quad m_{u,v}\left[0\right] = 0$$

$$l_{u,v}\left[k\right] = \left\{l_{u,v}\left[k-1\right] + u^{-1}\right\}\%L_{RA} , \quad l_{u,v}\left[0\right] = \begin{cases} (u^{-1}+1)/2 + C_v \\ (u^{-1}+1+L_{RA})/2 + C_v \end{cases}$$

u$^{-1}$ is an odd    u$^{-1}$ is an even

When the present embodiment is implemented, $S_u$ is omitted, $e^{j\frac{2\pi}{L_{RA}}*m_{u,v}[k]}$ is directly taken as the output, and the specific operations are as follows:

1) $e^{j\frac{2\pi}{L_{RA}}*m_{u,v}[k]}$ and n=0, 1, ... L$_{RA}$-1 are burned into a Read-Only Memory (ROM) for table look-up;

2) an initialized $l_{u,v}[0]$ is derived from $u^{-1}$ and $C_v$ which are configured by software;

3) $m_{u,v}[k]$ is obtained based on the above recursive formula; and

4) an equivalent $X_{u,v}[k]$ is obtained by looking up a table at 1) with $m_{u,v}[k]$ as an address.

After the DFT operation of the PRACH preamble sequence is completed, the PRACHs are directly mapped one by one on resource grids based on long-code/short-code indication.

Step 2.4: resource mapping of SRS

Online generation of the SRS sequence multiplexes the above generation logic for the ZC sequences of the other RSs to save the design cost, or may be independently designed and implemented, with the SRSs mapped at equal intervals on resource grids based on the RB start position and the RE start position which are configured by software and the comb spacing.

It should be understood by those of ordinary skill in the art that the functional modules/units in all or some of the operations, the systems and the devices in the methods disclosed above may be implemented as software, firmware, hardware, or suitable combinations thereof. If implemented as hardware, the division between the functional modules/units stated above does not necessarily correspond to the division of physical components; for example, one physical component may have a plurality of functions, or one function or operation may be performed through cooperation of several physical components. Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As is well known by those of ordinary skill in the art, the term "computer storage medium" includes volatile/nonvolatile and removable/non-removable media used in any method or technology for storing information (such as computer-readable instructions, data structures, program modules or other data). The computer storage medium includes, but is not limited to, an RAM, an ROM, an EEPROM, a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carriers or other transmission mechanisms, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that the features, characteristics and/or elements described in connection with a particular embodiment can be used alone or in combination with the features, characteristics and/or elements described in connection with other embodiments. Therefore, it should be understood by those of ordinary skill in the art that various changes in forms and details can be made without departing from the scope of the present disclosure of the appended claims.

**Claims**

1. A data processing method, comprising:

   determining a type of signal data; and
   performing, based on the type of the signal data, online processing on the signal data to map the signal data to time-frequency resources for transmission.

2. The data processing method of claim 1, wherein the signal data comprises at least one of Physical Uplink Shared Channel (PUSCH) data, Physical Uplink Shared Channel Demodulation Reference Signal (PUSCH_DMRS) data, Phase Tracking Reference Signal (PTRS) data, Physical Uplink Control Channel (PUCCH) data, Physical Uplink Control Channel Demodulation Reference Signal (PUCCH_DMRS) data, Physical Random Access Channel (PRACH) data, or Sounding Reference Signal (SRS) data.

3. The data processing method of claim 2, wherein when online processing is performed on at least one of the PUSCH data, the PUSCH_DMRS data, the PTRS data, the PUCCH data, the PUCCH_DMRS data, the PRACH data, or the SRS data, discrete Fourier transform resources and/or sequence generation resources are multiplexed.

4. The data processing method of claim 1, wherein the signal data comprises channel data and reference signal data; and when online processing is performed on the channel data and the reference signal data, generation of the reference signal data is initiated in advance by a preset number of clock cycles so that the signal data is aligned with the reference signal data in terms of timing sequence.

5. The data processing method of any one of claims 1 to 4, wherein performing online processing on the signal data based on the type of the signal data comprises:
   performing online processing on the signal data based on an uplink transmission scheme and the type of the signal data.

6. The data processing method of claim 5, wherein the uplink transmission scheme comprises Discrete Fourier Transform-Spread-Orthogonal Frequency Division Multiplexing (DFT-S-OFDM), and the signal data comprises PUSCH data; and performing online processing on the signal data based on the uplink transmission scheme and the type of the signal data comprises:

   preprocessing the PUSCH data;
   performing discrete Fourier transform operations on the preprocessed PUSCH data; and
   mapping the PUSCH data subjected to the discrete Fourier transform operations to the time-frequency resources online based on the uplink transmission scheme.

7. The data processing method of claim 6, wherein mapping the PUSCH data subjected to the discrete Fourier transform operations to the time-frequency resources online based on the uplink transmission scheme comprises:

mapping the PUSCH data subjected to the discrete Fourier transform operations to the time-frequency resources online based on the uplink transmission scheme, a configured resource block start position, and a number of resource blocks;

performing online padding with 0 data on the time-frequency resources corresponding to a non-scheduled resource block, or adding 0 data corresponding to the non-scheduled resource block; and

mapping the PUSCH data subjected to the discrete Fourier transform operations to the time-frequency resources online based on the uplink transmission scheme, the configured resource block start position, and the number of resource blocks.

8. The data processing method of claim 5, wherein the uplink transmission scheme comprises DFT-S-OFDM, and the signal data comprises PUSCH_DMRS data; and performing online processing on the signal data based on the uplink transmission scheme and the type of the signal data comprises:

generating the PUSCH_DMRS data online based on the uplink transmission scheme and a number of scheduled resource blocks; and

mapping the PUSCH_DMRS data to the time-frequency resources online based on a configured code division multiplexing group value and a no-data code division multiplexing group value.

9. The data processing method of claim 5, wherein the uplink transmission scheme comprises DFT-S-OFDM, and the signal data comprises PTRS data; and performing online processing on the signal data based on the uplink transmission scheme and the type of the signal data comprises:

generating the PTRS data online based on the uplink transmission scheme and a number of scheduled resource blocks; and

mapping the PTRS data to the time-frequency resources online based on the uplink transmission scheme, a number of groups within a bandwidth part allocated to corresponding PUSCHs, a number of consecutive PTRS data items in each group, and a number of scheduled PUSCH subcarriers.

10. The data processing method of claim 9, wherein mapping the PTRS data to the time-frequency resources online based on the uplink transmission scheme, the number of groups within the bandwidth part allocated to the corresponding PUSCHs, the number of consecutive PTRS data items in each group, and the number of scheduled PUSCH subcarriers comprises:

deducing a starting address of the PTRS data in a frequency domain based on the uplink transmission scheme, the number of groups within the bandwidth part allocated to the corresponding PUSCHs, the number of consecutive PTRS data items in each group, and the number of scheduled PUSCH subcarriers, or acquiring a configured starting address of the PTRS data in the frequency domain;

determining a mapping position of the PTRS data based on the starting address of the PTRS data in the frequency domain and the number of consecutive PTRS data items in each group; and

mapping the PTRS data to the time-frequency resources online based on the mapping position.

11. The data processing method of claim 5, wherein the uplink transmission scheme comprises Cyclic Prefix-Orthogonal Frequency Division Multiplexing (CP-OFDM), and the signal data comprises PUSCH data; and performing online processing on the signal data based on the uplink transmission scheme and the type of the signal data comprises:

preprocessing the PUSCH data; and

mapping the PUSCH data to the time-frequency resources online based on the uplink transmission scheme and a resource block mapping type.

12. The data processing method of claim 11, wherein mapping the PUSCH data to the time-frequency resources online based on the uplink transmission scheme and the resource block mapping type comprises:

in a case where the resource block mapping type is type 0, determining a scheduled resource block based on a configured bitmap signal; and in a case where the resource block mapping type is type 1, determining the scheduled resource block based on a configured resource block start position and a number of resource blocks; and

mapping the PUSCH data to the scheduled resource block online.

13. The data processing method of claim 12, wherein performing online processing on the signal data based on the uplink transmission scheme and the type of the signal data further comprises:

introducing 0 data corresponding to a non-scheduled resource block in a stage of preprocessing the PUSCH data; or
performing online padding with 0 data on the non-scheduled resource block in a stage of mapping the PUSCH data to the time-frequency resources online.

14. The data processing method of claim 5, wherein the uplink transmission scheme comprises CP-OFDM, and the signal data comprises PUSCH_DMRS data; and performing online processing on the signal data based on the uplink transmission scheme and the type of the signal data comprises:

generating the PUSCH_DMRS data online based on a frequency domain mapping type; and
mapping the PUSCH_DMRS data to the time-frequency resources online based on the frequency domain mapping type, a configured code division multiplexing group value, and a no-data code division multiplexing group value.

15. The data processing method of claim 14, wherein generating the PUSCH_DMRS data online based on the frequency domain mapping type comprises:

generating, in a case where the frequency domain mapping type is configuration type 1, the PUSCH_DMRS data online based on the uplink transmission scheme and a number of scheduled resource blocks; and
generating, in a case where the frequency domain mapping type is configuration type 2, the PUSCH_DMRS data through a look-up table when a length of the PUSCH_DMRS data is less than a preset length, and generating the PUSCH_DMRS data by performing recursion based on a preset step when the length of the PUSCH_DMRS data is greater than or equal to the preset length.

16. The data processing method of claim 5, wherein the uplink transmission scheme comprises CP-OFDM, and the signal data comprises PTRS data; and performing online processing on the signal data based on the uplink transmission scheme and the type of the signal data comprises:

generating the PTRS data online based on a frequency domain mapping type; and
mapping the PTRS data to the time-frequency resources online based on a configured count enable signal, mapping parameters, a first counter, and a second counter, wherein the first counter is configured to count scheduled resource elements, and the second counter is configured to count the scheduled resource elements of each layer.

17. The data processing method of any one of claims 1 to 4, wherein performing online processing on the signal data based on the type of the signal data comprises:
performing online processing on the signal data based on the type of the signal data and a configured PUCCH format.

18. The data processing method of claim 17, wherein the signal data comprises PUCCH data or PUCCH_DMRS data; and performing online processing on the signal data based on the type of the signal data and the configured PUCCH format comprises:

in a case where the configured PUCCH format is PUCCH format 3 or PUCCH format 4, generating the PUCCH data or the PUCCH_DMRS data online based on a resource block mapping type;
mapping the PUCCH data or the PUCCH_DMRS data to the time-frequency resources online based on a configured resource block start position and a number of resource blocks; and
in a case where the configured PUCCH format is neither the PUCCH format 3 nor the PUCCH format 4, mapping the PUCCH data or the PUCCH_DMRS data to the time-frequency resources online based on the configured resource block start position and the number of resource blocks.

19. The data processing method of any one of claims 1 to 4, wherein the signal data comprises PRACH data; and performing online processing on the signal data based on the type of the signal data comprises:

performing discrete Fourier transform operations on the PRACH data by means of recursion and table look-up; and

mapping the PRACH data subjected to the discrete Fourier transform operations to the time-frequency resources online based on a configured long-code/short-code indication signal.

20. The data processing method of any one of claims 1 to 4, wherein the signal data comprises SRS data; and performing online processing on the signal data based on the type of the signal data comprises:
mapping the SRS data to the time-frequency resources online based on a configured resource block start position, a resource element start position, and a comb spacing.

21. A data processing apparatus, comprising:

a classification unit, which is configured to determine a type of signal data; and
a processing unit, which is configured to perform, based on the type of the signal data, online processing on the signal data to map the signal data to time-frequency resources for transmission.

22. The data processing apparatus of claim 21, wherein the signal data comprises at least one of PUSCH data, PUSCH_DMRS data, PTRS data, PUCCH data, PUCCH_DMRS data, PRACH data, or SRS data.

23. The data processing apparatus of claim 22, wherein the processing unit comprises discrete Fourier transform resources and sequence generation resources; and
the discrete Fourier transform resources and/or the sequence generation resources are multiplexed when the processing unit performs online processing on at least one of the PUSCH data, the PUSCH_DMRS data, the PTRS data, the PUCCH data, the PUCCH_DMRS data, the PRACH data, or the SRS data.

24. The data processing apparatus of claim 21, wherein the signal data comprises channel data and reference signal data; and when the processing unit performs online processing on the channel data and the reference signal data, generation of the reference signal data is initiated in advance by a preset number of clock cycles so that the signal data is aligned with the reference signal data in terms of timing sequence.

FIG. 1

| | S1 |
| Determine a type of signal data | |

| | S2 |
| Perform, based on the type of the signal data, online processing on the signal data to map the signal data to time-frequency resources for transmission | |

FIG. 2

101                             102

| Classification Unit | Processing Unit |

FIG. 3

201                             202

| Processing Unit | Storage Unit |

FIG. 4

FIG. 5

FIG. 6

① This path indicates a process experienced by the PUSCH and part of the PUCCH (in format 2/3/4), where the DFT scheme is adopted and the PUCCH corresponds to a fixed layer number of 1; and the PUCCH in format 2 is not subjected to DFT, and is processed in the CP-OFDM scheme. The PUCCH is not precoded.

② This path indicates a process experienced by part of the PUCCH (in format 1/0).

FIG. 7

Schematic frequency-domain mapping of PUSCH_DMRS in CP-OFDM scheme configuration_type=2

Schematic frequency-domain mapping of PUSCH_DMRS in DFT-S-OFDM scheme configuration_type=1

Schematic frequency-domain mapping of PUSCH_DMRS in CP-OFDM scheme configuration_type=1

Schematic frequency-domain mapping of PUSCH_DMRS in CP-OFDM scheme configuration_type=2

FIG. 8

$$k = k_{\text{ref}}^{\text{RE}} + \left(iK_{\text{PT-RS}} + k_{\text{ref}}^{\text{RB}}\right)N_{\text{sc}}^{\text{RB}}$$

$$k_{\text{ref}}^{\text{RB}} = \begin{cases} n_{\text{RNTI}} \bmod K_{\text{PT-RS}} & \text{if } N_{\text{RB}} \bmod K_{\text{PT-RS}} = 0 \\ n_{\text{RNTI}} \bmod \left(N_{\text{RB}} \bmod K_{\text{PT-RS}}\right) & \text{otherwise} \end{cases}$$

FIG. 9

FIG. 10

## INTERNATIONAL SEARCH REPORT

| International application No. |
| --- |
| **PCT/CN2024/077734** |

**A.    CLASSIFICATION OF SUBJECT MATTER**

H04W72/1268(2023.01)i

According to International Patent Classification (IPC) or to both national classification and IPC

**B.    FIELDS SEARCHED**

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CNTXT, ENTXTC, ENTXT, DWPI, 3GPP, CNKI: 处理, 数据, 映射, 在线, 离散, 序列, 类型, dft, cp?ofdm, pucch, pusch, online, dmrs, srs, mapping, sequence, data type?, data category, process, discrete

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2022172177 A1 (LENOVO (SINGAPORE) PTE. LTD.) 18 August 2022 (2022-08-18) claims 1-15, and description, paragraphs [0084]-[0146] | 1-3, 5, 6, 11, 14, 17, 21-23 |
| A | CN 110999165 A (PANASONIC INTELLECTUAL PROPERTY CORP. OF AMERICA) 10 April 2020 (2020-04-10) entire document | 1-24 |
| A | CN 111566980 A (QUALCOMM INC.) 21 August 2020 (2020-08-21) entire document | 1-24 |
| A | CN 111034306 A (SHARP KK et al.) 17 April 2020 (2020-04-17) entire document | 1-24 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 May 2024** | **20 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/077734**

| Patent document cited in search report | | | Publication date (day/month/year) | Patent family member(s) | | | Publication date (day/month/year) |
|---|---|---|---|---|---|---|---|
| WO | 2022172177 | A1 | 18 August 2022 | None | | | |
| CN | 110999165 | A | 10 April 2020 | US | 2021266883 | A1 | 26 August 2021 |
| | | | | US | 11570768 | B2 | 31 January 2023 |
| | | | | WO | 2019028717 | A1 | 14 February 2019 |
| | | | | WO | 2019028717 | A8 | 07 March 2019 |
| | | | | RU | 2736626 | C1 | 19 November 2020 |
| | | | | EP | 3665820 | A1 | 17 June 2020 |
| | | | | EP | 3665820 | A4 | 22 July 2020 |
| | | | | US | 2023422267 | A1 | 28 December 2023 |
| | | | | AU | 2017426866 | A1 | 06 February 2020 |
| | | | | AU | 2017426866 | B2 | 11 May 2023 |
| | | | | US | 2023146761 | A1 | 11 May 2023 |
| | | | | US | 11792823 | B2 | 17 October 2023 |
| | | | | BR | 112020001065 | A2 | 14 July 2020 |
| | | | | KR | 20200037242 | A | 08 April 2020 |
| | | | | KR | 102405391 | B1 | 03 June 2022 |
| | | | | JP | 2020529755 | A | 08 October 2020 |
| | | | | JP | 7114640 | B2 | 08 August 2022 |
| | | | | ZA | 202000724 | B | 25 August 2021 |
| | | | | US | 2020178222 | A1 | 04 June 2020 |
| | | | | US | 11026222 | B2 | 01 June 2021 |
| CN | 111566980 | A | 21 August 2020 | WO | 2019140076 | A1 | 18 July 2019 |
| | | | | EP | 3738259 | A1 | 18 November 2020 |
| | | | | US | 2019222399 | A1 | 18 July 2019 |
| | | | | US | 11394517 | B2 | 19 July 2022 |
| | | | | US | 2023006801 | A1 | 05 January 2023 |
| CN | 111034306 | A | 17 April 2020 | WO | 2019049938 | A1 | 14 March 2019 |
| | | | | AR | 112896 | A1 | 26 December 2019 |
| | | | | EP | 3681224 | A1 | 15 July 2020 |
| | | | | EP | 3681224 | A4 | 09 June 2021 |
| | | | | JP | 2019050469 | A | 28 March 2019 |
| | | | | US | 2020403748 | A1 | 24 December 2020 |

Form PCT/ISA/210 (patent family annex) (July 2022)

## EP 4 676 147 A1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310288599